# DEMANDE DE BREVET EUROPEEN

(11) **EP 1 514 770 A1**
(43) Date de publication de la demande: **16.03.2005**
(21) Numéro de dépôt: 04300583.4
(22) Date de dépôt: 08.09.2004
(51) Int. Cl.: B62D 25/20

(54) **Soubassement pour véhicule automobile du type cabriolet ou coupé cabriolet**

(30) Priorité: 09.09.2003 FR 0310617
(71) Demandeur: Peugeot Citroen Automobiles SA, 78943 Vélizy-Villacoublay Cedex (FR)
(72) Inventeur: Vincenti, Richard, 90300 Valdoie (FR)
(74) Mandataire: De Cuenca, Emmanuel Jaime

(57) **Abrégé**

L'invention concerne un soubassement (1') pour véhicule automobile du type cabriolet ou coupé-cabriolet, comprenant notamment un plancher avant (10'), un tunnel (19) et sa doublure associée (18), de chaque côté du plancher et de façon symétrique par rapport au tunnel, un longeron longitudinal (13) qui s'étend le long du bord extérieur du plancher avant en y étant fixé, un renfort intérieur de longeron qui s'étend le long du bord extérieur du plancher avant en y étant fixé sur le dessus, de chaque côté du plancher avant et de façon symétrique en dessous du plancher, une partie d'un brancard (14) qui s'étend en partie en dessous du plancher avant en y étant fixé, une première pièce de renfort de longeron dite « renfort inférieur de longeron » (11) qui s'étend en partie en dessous du longeron longitudinal (13) en y étant fixé.

Selon l'invention, la première pièce de renfort de longeron (11) dite « renfort inférieur de longeron » a une section transversale en U et forme ainsi un premier corps creux et le soubassement comprend en outre, de chaque côté du plancher avant et de façon symétrique par rapport au tunnel (19), une deuxième pièce de renfort (12) dite « extension de renfort de longeron » dont une partie (120) est sensiblement parallèle au plancher avant (10') et qui est fixée d'une part au « renfort inférieur de longeron » et d'autre part à une branche de brancard (14) dans le sens longitudinal du soubassement en formant un autre corps creux.

## Description

La présente invention concerne un nouveau soubassement pour véhicule automobile du type cabriolet ou coupé cabriolet.

Il est bien connu dans le domaine automobile que la rigidité d'une caisse de véhicule automobile a une influence directe sur deux comportements importants dudit véhicule, à savoir respectivement le comportement routier et le comportement vibratoire du véhicule.

Les véhicules automobiles du type cabriolet ou coupé-cabriolet sont par définition privés de pavillon de toit fixe.

L'absence de pavillon de toit fixe s'accompagne nécessairement d'une diminution importante de rigidité, principalement en torsion de la caisse.

Pour résoudre ce problème, il a déjà été proposé des solutions consistant à rigidifier le plancher avant.

Or, ces solutions ne sont pas satisfaisantes car le niveau de rigidification atteint n'est pas suffisant pour certaines caisses de plus grandes dimensions.

Le but de l'invention est alors de proposer une nouvelle solution qui permette de compenser l'absence de rigidité, principalement en torsion, d'une caisse de grandes dimensions, due à l'absence de pavillon de toit fixe sur tout type de véhicule cabriolet ou coupé cabriolet.

Pour ce faire l'invention a pour objet, un soubassement pour véhicule automobile du type cabriolet ou coupé-cabriolet, comprenant un plancher avant dont la partie centrale du dessus constitue un tunnel, de chaque côté du plancher avant et de façon symétrique du tunnel, un longeron longitudinal qui s'étend le long du bord extérieur du plancher avant en y étant fixé, un renfort intérieur de longeron qui s'étend le long du bord extérieur du plancher avant en y étant fixé sur le dessus, une pièce dite « doublure de tunnel » qui épouse substantiellement le tunnel en étant fixée à celui-ci et au plancher avant et, de chaque côté du plancher avant et de façon symétrique en dessous du plancher, une partie d'un brancard qui s'étend en partie en dessous du plancher avant en y étant fixé, une première pièce de renfort de longeron dite « renfort inférieur de longeron » qui s'étend en partie en dessous du longeron longitudinal en y étant fixé, une première traverse dite « traverse avant d'assise » qui s'étend de la doublure de tunnel à un bord extérieur du plancher avant, une deuxième traverse dite « traverse arrière d'assise » parallèle et à distance de la première traverse qui s'étend également de la doublure de tunnel au bord extérieur du plancher avant, caractérisé en ce que la première pièce de renfort de longeron dite « renfort inférieur de longeron » a une section transversale en U et forme ainsi un premier corps creux et en ce que il comprend en outre, de chaque côté du plancher avant et de façon symétrique par rapport au tunnel, une deuxième pièce de renfort dite « extension de renfort de longeron » dont une partie est sensiblement parallèle au plancher avant et qui est fixée d'une part au « renfort inférieur de longeron » et d'autre part à une branche de brancard dans le sens longitudinal du soubassement en formant un autre corps creux.

Avantageusement, le soubassement comprend en outre, de chaque côté du plancher avant et de façon symétrique au dessus du plancher, une troisième pièce de renfort dite »raidisseur de plancher avant » qui est fixée respectivement à la traverse arrière d'assise et à la traverse avant d'assise et qui est fixée d'une part à l'arrière de la traverse arrière d'assise et d'autre part à l'avant de la « traverse avant d'assise dans le sens transversal du soubassement.

Avantageusement encore, la troisième pièce de renfort dite « raidisseur de plancher avant » est en outre fixée au « renfort intérieur de longeron » et à la « doublure de tunnel » dans le sens longitudinal du soubassement.

Selon un mode de réalisation préféré, la première, deuxième et troisième pièces de renfort sont réalisées en tôle emboutie.

Avantageusement, la deuxième pièce de renfort est une pièce plane présentant un coin embouti.

Avantageusement encore, la deuxième pièce de renfort présente une section longitudinale sous la forme d'un angle obtus, l'angle étant confondu avec le bord avant de la traverse avant.

Avantageusement encore, les fixations de la deuxième et de la troisième pièces de renfort sont réalisées par cordons de soudure à arc.

Avantageusement encore, les fixations de la première pièce de renfort sont réalisées par points de soudure électrique.

D'autres caractéristiques et avantages de l'invention ressortiront mieux à la lecture de la description détaillée d'un mode de réalisation faite en référence aux figures suivantes dans lesquelles :
- la figure 1 est une vue en perspective de dessous d'un soubasement d'un véhicule automobile de type berline ;
- la figure 2 est une vue en pespective de dessous du soubassement de véhicule automobile selon l'invention de type coupé-cabriolet, la figure 2a est une vue agrandie du soubassement de l'invention au niveau de l'assise de siège avant;
- la figure 3 est une vue en coupe longitudinale du soubassement selon la figure 2 au niveau de l'assise de siège avant;
   *- la figure 4 est une vue en coupe transversale du soubassement de l'invention selon la figure 2, au niveau de l'assise avant ;
- la figure 5 est une vue de dessus du soubassement selon l'invention au niveau de l'assise avant .

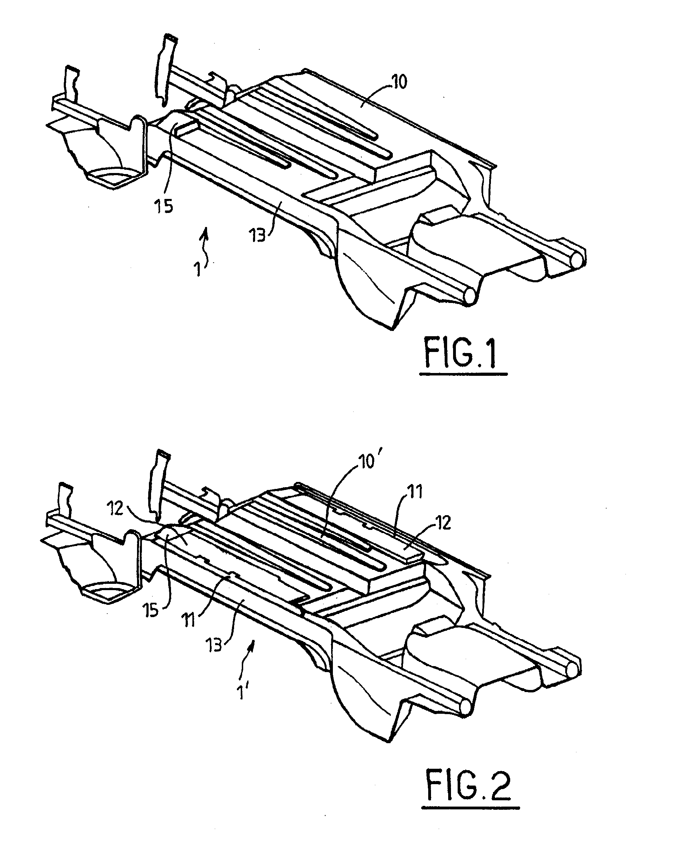

Sur la figure 1, on voit un plancher avant 10 d'un soubassement 1 de véhicule automobile connu de type berline.

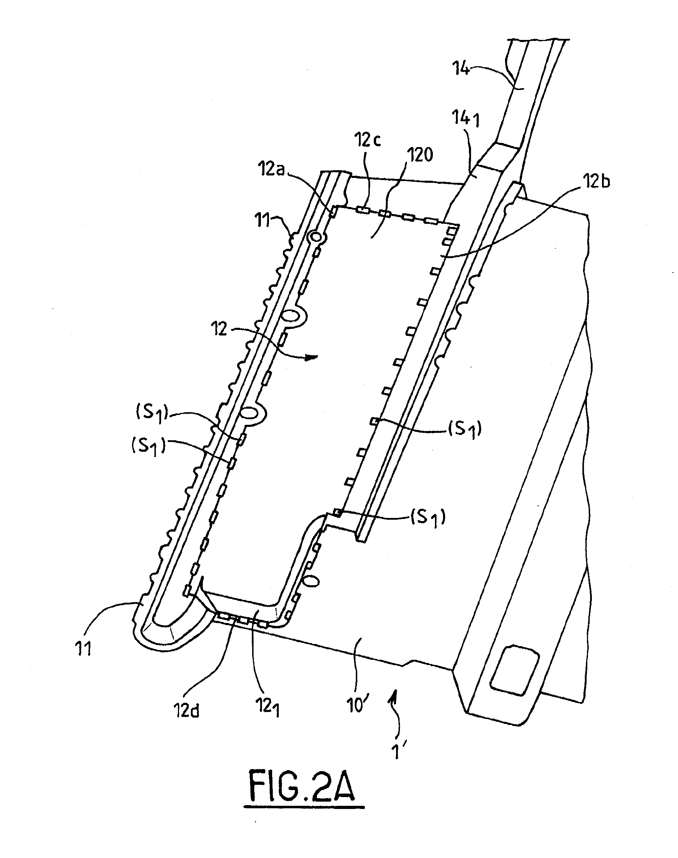

La figure 2 est,quant à elle, une vue de dessous du soubassement l' selon l'invention d'un véhicule automobile de type coupé-cabriolet.

Ce soubassement l' se distingue de celui connu 1 tout d'abord par le fait que deux pièces supplémentaires de renfort 11 et 12 sont fixées en dessous du plancher 10'.

Plus exactement, en référence à la figure 2A, on voit que la première pièce supplémentaire de renfort 11 est une longue pièce emboutie de section transversale en forme de U qui est soudée directement en dessous du longeron longitudinal 13 du soubassement 1'.

Les soudures ont été réalisées par point de soudure électrique non représentés ici.

Cette première pièce supplémentaire de renfort 11 est appelée ici «renfort inférieur de longeron ».

Sur ce renfort inférieur de longeron 11 est soudée un bord longitudinal 12a d'une deuxième pièce de renfort 12 également en tôle dite « extension de renfort de longeron » présentant une forme générale plane 120 et un coin embouti 121 (figure 2A).

L'autre bord longitudinal 122 de cette extension de renfort de longeron est soudé directement en dessous d'une branche extérieure 141 de brancard 14.

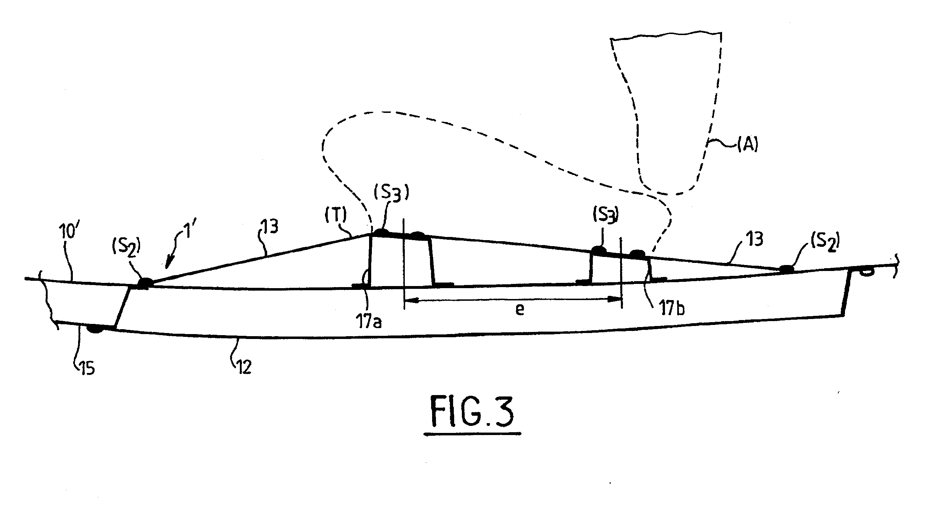

Les autres bords 12c,12d, quant à eux, sont respectivement soudés à l'avant à une pièce de liaison 15, connue en soi, reliant le brancard 14 et le longeron longitudinal 13 et à l'arrière directement au plancher (figure 3).

Les soudures pour fixer cette deuxième pièce ont été réalisées par cordons (S1) de soudure à arc (figure 2A).

La fixation de cette pièce 12 est réalisée de manière à ce que la partie plane 120 soit parallèle au plan général du plancher avant 10 (figure 2A).

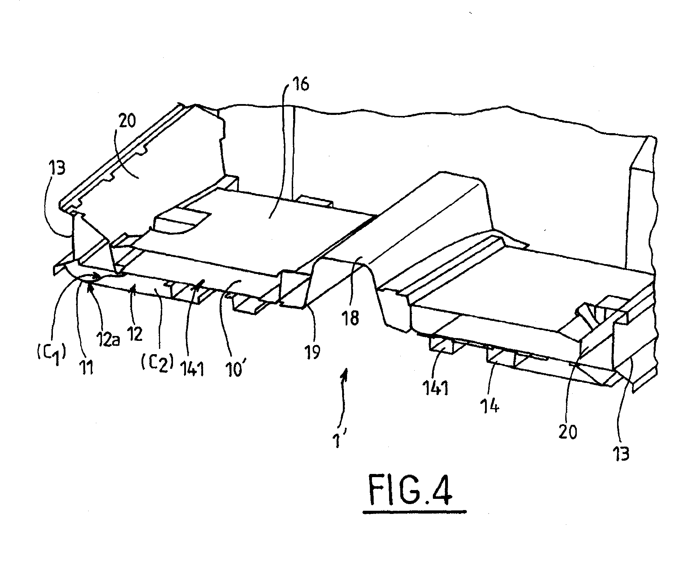

Avec ces deux pièces de renfort 11,12 et les deux corps creux (C1) et (C2) qu'elles constituent (figure 4), le soubassement l' selon l'invention a été fortement rigidifié et permet à la caisse du véhicule de type coupé-cabriolet qui en est équipé d'avoir une résistance à la torsion statique et dynamique suffisante pour compenser l'absence d'un toit rigide.

Afin d'augmenter encore le niveau de rigidification et donc, la résistance à la torsion de la caisse avec le soubassement selon l'invention, une autre pièce de renfort 16 a été implantée sur la partie du dessus du véhicule. Cette troisième pièce de renfort 16, telle que montrée aux figures 3 et 4, est une tôle de section longitudinale triangulaire (T) et appelée ici « raidisseur de plancher avant ».

La fixation de cette pièce 16 sur le soubassement 1 a été réalisée tout d'abord en l'amenant au-dessus du plancher avant au niveau des traverses avant 17a et arrière 17b de sorte que le sommet de la section triangulaire (T) coincïde avec le bord avant 170a de la traverse avant (figure 3).

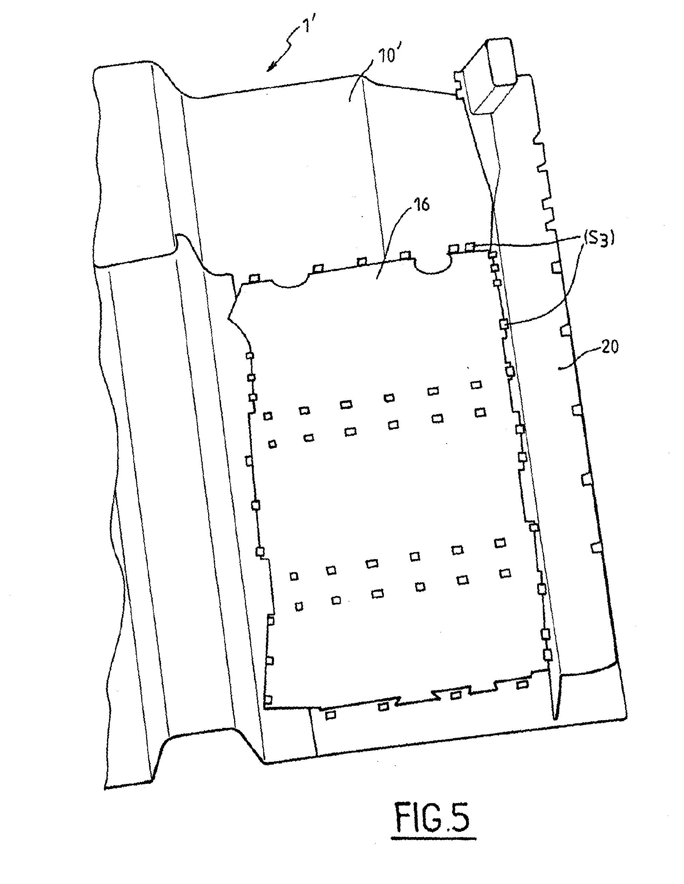

Une fois cette troisième pièce 16 de renfort positionnée, une soudure à arc par cordons (S2) est réalisée le long des bords de cette pièce et également sur cette pièce au niveau de chaque traverse par deux cordons (S3) ( figures 3 et 5).

Cette pièce 16 s'étend, selon l'axe tranversal du soubassement, de la partie intérieure de la doublure de tunnel 18 soudée au tunnel 19 jusqu'à la partie renfort intérieur de longeron 20, connue en soi, qui s'étend le long du longeron longitudinal 13, en étant soudée à ces pièces 20,18.

Cette pièce 16 s'étend,selon l'axe longitudinal du soubassement, depuis une zone située à l'arrière de la traverse arrière 17b jusqu'à une zone située à l'avant de la traverse avant 17a.

La fixation de cette pièce 16 permet, de manière supplémentaire, de limiter la torsion de la caisse au roulage du véhicule. L'espacement e entre ces deux traverses 17a,17b est dimensionné de manière à soutenir un siège 2 ( voir figure 3, en pointillés).

Plus précisément, les trois pièces de renfort 11,12,16 (en réalité, ces six pièces puisque les mêmes pièces 11,12,16 sont prévues de l'autre côté du tunnel) permettent d'éviter une torsion trop importante de plancher avant 10 autour du tunnel 19 en limitant l'amplitude des déplacements relatifs d'un bord longitudinal du soubassement par rapport à l'autre.

En d'autres termes, la torsion de la caisse au roulage du véhicule est sensiblement limitée grâce à l'implantation de ces pièces.

L'invention qui vient d'être décrite permet avantageusement de rigidifier la caisse d'un véhicule automobile du type coupé ou coupé cabriolet sur lesquels, par définition, l'absence de toit fixe constitue un point faible de la structure du véhicule. Plus généralement l'invention s'applique à tout soubassement de véhicule comprenant un pavillon de toit amovible. De plus, elle constitue une solution simple et peu coûteuse à réaliser.

Enfin, elle évite de surdimensionner les longerons longitudinaux de part et d'autre du bord extérieur du plancher avant, ce qui permet, tout en atteignant le niveau de rigidification requis, de conserver respectivement:
- la synthèse de l'habitacle, c'est à dire la manière dont sont implantés les sièges à l'intérieur de celui-ci ;
- la partie inférieure de la porte sous vitre, avec son panneau de garniture;
- l'accessibilité à bord puisqu'il n'y a pas de remontée de la feuillure inférieure de porte.

Bien entendu, il va de soi que d'autres améliorations peuvent être apportées sans pour autant sortir du cadre de l'invention.

Ainsi, les dimensions, en particulier longitudinales de chacune des deux pièces de renfort conformes à l'invention peuvent être adaptées en fonction de celles du soubassement et en particulier de l'espacement respectivement prévu entre chaque branche extérieure du brancard et du longeron longitudinal d'une part et celui prévu entre le tunnel et/ou le renfort du tunnel et le renfort intérieur de longeron d'autre part.

## Revendications

1. Soubassement (1') pour véhicule automobile du type cabriolet ou coupé-cabriolet, comprenant un plancher avant (10') dont la partie centrale du dessus constitue un tunnel (19), de chaque côté du plancher avant et de façon symétrique du tunnel, un longeron longitudinal (13) qui s'étend le long du bord extérieur du plancher avant en y étant fixé, un renfort intérieur (20) de longeron qui s'étend le long du bord extérieur du plncher avant en y étant fixé sur le dessus, une pièce dite « doublure de tunnel » (18) qui épouse substantiellement le tunnel en étant fixée à celui-ci et au plancher avant (10') et, de chaque côté du plancher avant et de façon symétrique en dessous du plancher, une partie d'un brancard (14) qui s'étend en partie en dessous du plancher avant en y étant fixé, une première pièce de renfort de longeron dite « renfort inférieur de longeron » (11) qui s'étend en partie en dessous du longeron longitudinal (13) en y étant fixé, une première traverse dite « traverse avant d'assise » (17a) qui s'étend de la doublure de tunnel (18) à un bord extérieur du plancher avant, une deuxième traverse dite « traverse arrière d'assise » (17b) parallèle et à distance de la première traverse qui s'étend également de la doublure de tunnel (18) au bord extérieur du plancher avant, **caractérisé en ce que** la première pièce de renfort de longeron (11) dite « renfort inférieur de longeron » a une section transversale en U et forme ainsi un premier corps creux (C1) et **en ce que** il comprend en outre, de chaque côté du plancher avant et de façon symétrique par rapport au tunnel (19), une deuxième pièce de renfort (12) dite « extension de renfort de longeron » dont une partie (120) est sensiblement parallèle au plancher avant (10') et qui est fixée d'une part au « renfort inférieur de longeron » et d'autre part à une branche de brancard (14) dans le sens transversal du soubassement en formant un autre corps creux (C2).

2. Soubassement selon la revendication 1, **caractérisé en ce qu'**il comprend en outre , de chaque côté du plancher avant et de façon symétrique au dessus du plancher, une troisième pièce de renfort (16) dite »raidisseur de plancher avant » qui est fixée respectivement à la traverse arrière d'assise (17b) et à la « traverse avant d'assise (17a) et qui est fixée d'une part à l'arrière de la traverse arrière d'assise et d'autre part à l'avant de la « traverse avant d'assise dans le sens transversal du soubassement.

3. Soubassement selon la revendication 2, **caractérisé en ce que** la troisième pièce de renfort (16) dite « raidisseur de plancher avant » est en outre fixée au « renfort intérieur de longeron » et à la « doublure de tunnel » dans le sens longitudinal du soubassement.

4. Soubassement selon l'une quelconque des revendications 1 à 3, **caractérisé en ce que** la première, deuxième et troisième pièces de renfort sont réalisées en tôle emboutie.

5. Soubassement selon l'une quelconque des revendications précédentes, **caractérisé en ce que** la deuxième pièce de renfort (12) est une pièce plane présentant un coin embouti.

6. Soubassement selon l'une quelconque des revendications précédentes, **caractérisé en ce que** la deuxième pièce de renfort (12) présente une section longitudinale sous la forme d'un angle obtus, l'angle étant confondu avec le bord avant de la traverse avant.

7. Soubassement selon l'une quelconque des revendications précédentes, **caractérisé en ce que** les fixations de la deuxième et de la troisième pièces de renfort sont réalisées par cordons de soudure à arc.

8. Soubassement selon l'une quelconque des revendications précédentes, **caractérisé en ce que** les fixations de la première pièce de renfort sont réalisées par points de soudure électrique.
